Europäisches Patentamt

(19) European Patent Office

Office européen des brevets

(11) EP 0 457 209 B1

(12) EUROPÄISCHE PATENTSCHRIFT

(45) Veröffentlichungstag und Bekanntmachung des Hinweises auf die Patenterteilung:
03.01.1996 Patentblatt 1996/01

(51) Int. Cl.⁶: **B29C 55/02**, B32B 17/00

(21) Anmeldenummer: 91107599.2

(22) Anmeldetag: 10.05.1991

(54) **Verfahren zur Herstellung einer Folie aus thermoplastischem Kunststoff, Folie, hergestellt nach dem Verfahren, und Verbundsicherheitsglas, hergestellt unter Verwendung der Folie**

Method for the production of a thermoplastic film, film produced according to the method and composite safety glass produced by using the film

Procédé pour la fabrication d'une feuille en matériau thermoplastique, feuille produite par le procédé et vitre de sécurité composite produit en utilisant la feuille

(84) Benannte Vertragsstaaten:
DE FR GB IT

(30) Priorität: 15.05.1990 DE 4015571

(43) Veröffentlichungstag der Anmeldung:
21.11.1991 Patentblatt 1991/47

(73) Patentinhaber: HOECHST AKTIENGESELLSCHAFT
D-65926 Frankfurt am Main (DE)

(72) Erfinder:
• Grolig, Gerhard, Dr., Dipl.-Phys.
W-6082 Mörfelden-Walldorf (DE)
• Lang, Peter
W-6203 Hochheim (DE)
• Roth, Werner, Dr., Dipl.-Phys.
W-6239 Eppstein (DE)
• Eberhardt, Horst, Dipl.-Ing.
W-6229 Walluf (DE)

(56) Entgegenhaltungen:
EP-A- 0 077 672          EP-A- 0 240 632
CH-A-   500 062          DE-A- 1 629 562
FR-A- 1 295 367

• PATENT ABSTRACTS OF JAPAN vol. 9, no. 114 (M-380)(1837) 18. Mai 1985& JP-A-60 02 334 (UNITIKA) 8. Januar 1985
• DATABASE WPIL Section Ch, Week 19, Derwent Publications Ltd., London, GB; Class A, AN 82-38593E & JP-A-57 057 628 (TEIJIN) 6. April 1982

## Beschreibung

Die Erfindung betrifft ein Verfahren zur Herstellung einer Folie aus thermoplastischem Kunststoff, die bei Temperaturen oberhalb der Glastemperatur biaxial verstreckt und thermofixiert ist, eine Folie, hergestellt nach dem Verfahren, sowie ein Verbundsicherheitsglas, hergestellt unter Verwendung der Folie.

Folien aus thermoplastischem Material werden häufig mit weiterem Schichtmaterial zu Verbunden zusammengefügt. Beispielsweise werden Folien aus Polyethylenterephthalat als Träger für Funktionsschichten genutzt. Diese beschichteten Folien werden zwischen zwei Folien aus Polyvinylbutyral eingebettet und in Verbundsicherheitsglasscheiben integriert.

Verbundsicherheitsglas gehört zu den heute oft verwendeten Verglasungsmaterialien. Beispielsweise besteht ein großer Teil der Kraftfahrzeugscheiben aus Verbundsicherheitsglas. Auch in der Gebäundeverglasung wird Verbundsicherheitsglas eingesetzt.

Das heute übliche Verbundsicherheitsglas besteht im allgemeinen aus drei Lagen, indem zwei Glasscheiben durch eine Folie aus Polyvinylbutyral miteinander verbunden sind. Derartige Glaslaminate bieten ein hohes Maß an Sicherheit, da im Fall einer stoßartigen Belastung die Folie aus Polyvinylbutyral elastisch mechanische Energie aufnimmt und möglicherweise entstehende Glassplitter an der Folie haften bleiben.

Die Anforderungen, die heute an Verbundsicherheitsglas gestellt werden, sind jedoch nicht auf den Sicherheitsaspekt beschränkt. In bestimmten Fällen ist es vielmehr erwünscht, daß derartige Verbundsicherheitsgläser zusätzliche Funktionen erfüllen. Es kann z.B. erforderlich sein, daß die Scheibe aus Verbundsicherheitsglas einen speziellen Wärmeschutz oder Schutz vor starker Sonneneinstrahlung bietet. Weitere Anforderungen, die z.B. speziell an Kraftfahrzeug-Windschutzscheiben gestellt werden, sind die elektrische Beheizbarkeit und die Möglichkeit, sogenannte Head-up-Displays aufzunehmen.

Eine Möglichkeit, Verbundsicherheitsglas mit zusätzlichen Funktionen auszustatten, besteht darin, dünne Schichten in das Glaslaminat zu integrieren. Dies kann dadurch geschehen, daß eine oder mehrere Funktionsschichten auf derjenigen Seite einer der beiden Glasscheiben aufgebracht werden, die in dem anschließenden Laminierprozeß der Polyvinylbutyralfolie zugewandt ist. Einzelne Glasscheiben zu beschichten, ist sehr aufwendig und teuer. Bei der Herstellung von Windschutzscheiben für Kraftfahrzeuge kommt die Schwierigkeit hinzu, daß die beschichteten, zunächst ebenen Scheiben noch einen Biegeprozeß unter Wärme durchlaufen müssen, was leicht zum Zerreißen der Funktionsschichten führen kann. Bei diesem kritischen Arbeitsschritt ist die Ausbeute nur niedrig.

Es ist kostengünstiger, dünne Funktionsschichten dadurch in Glaslaminate zu integrieren, daß die Schichten zunächst in einem kontinuierlichen Prozeß auf eine hochtransparente Substratfolie aufgebracht werden und dann die beschichtete Substratfolie in den Glasverbund eingebaut wird.

Als Material für die Substratfolie kommt u.a. Polyethylenterephthalat in Frage. Die beschichtete Substratfolie wird zwischen zwei Folien aus Polyvinylbutyral eingebettet und so Verbundsicherheitsglasscheiben mit dem Aufbau Glas/PVB-Folie/(beschichtete Folie)/PVB-Folie/Glas hergestellt. Werden kommerziell verfügbare Polyethylenterephthalatfolien verwendet, so wird an den fertigen Glaslaminaten beobachtet, daß die beschichtete Substratfolie Wellen bildet. Das Aussehen der Glaslaminate wird dadurch stark gestört, auch erscheinen Gegenstände, die durch ein solches Glaslaminat betrachtet werden, verzerrt. Diese Glaslaminate kommen für einen Einsatz nicht in Frage.

In der europäischen Patentschrift 0 077 672 wird eine Lösung dieses Problems vorgeschlagen. Die wesentliche Idee dabei ist, daß nur solche Folien aus Polyethylenterephthalat als Substratfolie verwendet werden, die sehr spezielle thermomechanische Eigenschaften besitzen. Damit ist gemeint, daß der thermische Schrumpf E einer Folie und ihre Dicke d die folgenden Relationen erfüllen:

$$4,4 \geq E \geq 0,00028 \times (d-128)^2 \qquad (1)$$

$$d < 125 \qquad (2)$$

Dabei steht E für den thermischen Schrumpf, gemessen in %, der sich nach einer 30-minütigen Temperaturbelastung von 120 °C einstellt, und d für die in $\mu m$ gemessene Foliendicke. Die Beschränkung des zugelassenen thermischen Schrumpfs auf das in (1) angegebene Intervall ist darin begründet, daß einerseits ein höherer Schrumpf zu einer Beschädigung der Funktionsschicht führt und andererseits mit einem niedrigeren Schrumpf die immer auftretenden kleinen Planlagefehler der Folie nicht mehr ausgeglichen werden können.

Es zeigt sich jedoch, daß es selbst mit Substratfolien, die die beiden Relationen (1) und (2) erfüllen, schwierig ist, Glaslaminate herzustellen, die ein einwandfreies Aussehen besitzen. Besonders Folien, die in den Randbereich des durch die Relationen (1) und (2) definierten Gebiets der E-d-Ebene fallen, führen in den Glaslaminaten zu einer beschädigten Funktionsschicht bzw. zu Planlagefehlern.

Die Vorschrift (1) impliziert, daß der Schrumpf von Folien umso genauer eingestellt sein muß, je dünner die Folie ist. Für Folien der Dicke d = 12 $\mu m$ liefern (1) und (2) beispielsweise einen Schrumpf im Bereich von 4,4 > E > 3,7. Folien der Dicke d = 2,6 $\mu m$ und kleiner sind durch (1) von der Anwendung ausgeschlossen. In der genannten Patentschrift wird der Bereich

$$3,9 \geq E \geq 0,00028 \times (d-130)^2 \qquad (3)$$

$$d < 125$$

als besonders günstig bezeichnet. Durch (3) werden sogar Folien der Dicke d kleiner/gleich 12 μm von der Anwendung ausgeschlossen.

Bei den meisten Verfahren zur Herstellung von Verbundkörpern aus flächigen Gebilden werden die einzelnen Schichtstoffe zunächst aufeinandergelegt bzw. zusammengeführt und anschließend einer Temperatur- und Druckbelastung unterworfen. Folien aus thermoplastischem Material dehnen sich beim Aufheizen zunächst aus, was im Verbundkörper zu einer Wellenbildung führt. Um die Wellen wieder zu glätten, muß der bei höheren Temperaturen einsetzende Schrumpf sehr groß sein. Dadurch kommt es dann aber zu Beschädigungen der Funktionsschicht. Dimensionsänderungen, bei denen die Funktionsschicht nicht geschädigt wird, reichen im allgemeinen nicht aus, um die durch die thermische Ausdehnung verursachten Wellen zu glätten.

In der deutschen Patentanmeldung P 39 04 191.3 ist ein Verfahren zur Herstellung eines Glaslaminats, bestehend aus Glas, Polyvinylbutyral-Folie und beschichteter Kunststoffolie beschrieben, wobei als Trägerfolie für die Funktionsschicht nicht nur Polyethylenterephthalatfolien mit speziellen Schrumpfeigenschaften, sondern alle handelsüblichen, hochtransparenten Kunststoffolien, die thermischen Schrumpf besitzen, verwendet werden können. Bei diesem Verfahren wird während des Laminiervorgangs dafür gesorgt, daß sich die flächenmäßige Abmessung der die Funktionsschicht tragenden Folien nicht verkleinert. Dies wird in der Weise realisiert, daß die Folie während des Laminiervorgangs in eine Haltevorrichtung eingespannt ist.

Diese Art der Herstellung eines Verbundsicherheitsglases ist aufwendig. Besonders bei sphärisch gebogenen Glasscheiben mit komplizierter Randlinie ist es schwierig, die Folie während des Laminiervorgangs an allen vier Seiten gleichmäßig festzuhalten.

Der Erfindung liegt die Aufgabe zugrunde, ein Verfahren zur Herstellung einer Folie aus thermoplastischem Kunststoff zu schaffen, die geeignet ist, in einem Verbundkörper, wie beispielsweise einem Verbundsicherheitsglas, integriert zu werden, ohne daß die Folie während des Laminiervorgangs entlang ihrer Ränder zur Vermeidung einer Wellenbildung festgehalten werden muß. Im Rahmen dieser Aufgabe soll auch unter Verwendung dieser Folie ein Verbundsicherheitsglas geschaffen werden, das weitgehend frei von störender Wellenbildung der Folie ist.

Diese Aufgabe wird erfindungsgemäß dadurch gelöst, daß nach der Thermofixierung eine weitere Verstreckung der Folie bei Temperaturen unterhalb der Glastemperatur vorgenommen wird.

Dabei erfolgt die weitere Verstreckung bei Temperaturen im Bereich von 30 bis 60 °C. Die Folie wird entweder mono- oder biaxial weiter verstreckt. In Ausgestaltung des Verfahrens wird die Folie bei Temperaturen unterhalb der Glastemperatur in Längs- und Querrichtung jeweils zwischen 0,5 % und 10 % weiter verstreckt.

Die nach voranstehend beschriebenen Verfahrensschritten hergestellte Folie besteht aus einem thermoplastischen Kunststoff, wie Polyethylenterephthalat, Polyamid oder Polyethersulfon, das bei Temperaturen unterhalb der Glastemperatur im Bereich von 30 bis 60 °C zusätzlich biaxial verstreckt ist, und darüber hinaus weist die Folie bei einer Temperatur im Bereich von 30 °C bis 90 °C einen thermischen Schrumpf auf.

Die Weiterbildung der Folie ergibt sich aus den Ansprüchen 6 bis 10.

Die Ausgestaltung des Verbundsicherheitsglases ergibt sich aus den Merkmalen des Patentanspruchs 11.

Der wesentliche Vorteil des Verfahrens besteht darin, daß die danach hergestellte Folie aus thermoplastischem Material keine oder nur sehr geringfügige, die Funktionsfähigkeit eines Verbundkörpers bzw. eines Verbundsicherheitsglases nicht beeinträchtigende Wellen bildet, wenn sie als integraler Teil des Verbundkörpers einer Temperaturbelastung unterworfen wird. Der Grund hierfür ist, daß durch die zusätzliche Verstreckung der Folie unterhalb der Glastemperatur die thermische Ausdehnung der Folie durch einen schon bei niedrigen Temperaturen einsetzenden thermischen Schrumpf kompensiert wird, so daß sich keine oder nur sehr geringfügige, vernachlässigbare Wellen bilden können.

Die Erfindung wird im folgenden anhand der Zeichnungen näher beschrieben. Es zeigen:

Figur 1    einen Schnitt durch eine beschichtete Folie nach der Erfindung,

Figur 2    einen Schnitt durch die Schichten eines Glas-Folien-Laminats,

Figur 3    die Dimensionsänderung einer herkömmlichen, biaxial verstreckten Folie in Maschinenlaufrichtung, in Abhängigkeit von der Temperatur,

Figur 4    die Dimensionsänderung einer Folie nach der Erfindung in Maschinenlaufrichtung, in Abhängigkeit von der Temperatur,

Figur 5    die Dimensionsänderung einer herkömmlichen Folie quer zur Maschinenlaufrichtung, in Abhängigkeit von der Temperatur, und

Figur 6    die Dimensionsänderung einer Folie nach der Erfindung, quer zur Maschinenlaufrichtung, in Abhängigkeit von der Temperatur.

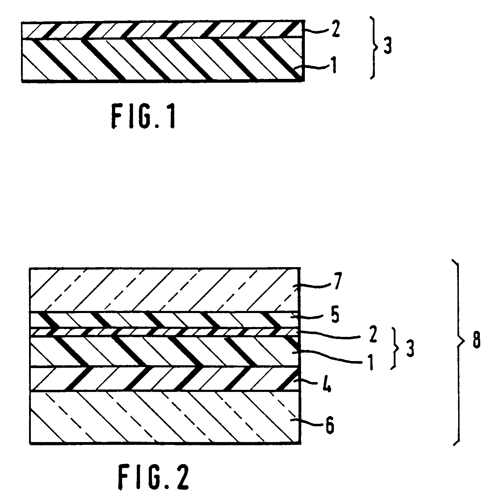

Der Schnitt in Figur 1 zeigt eine beschichtete Kunststoffolie 3 aus einer Substratfolie 1 und einer oder mehreren Funktionsschichten 2. In Figur 1 ist nur eine einzige Funktionsschicht 2 dargestellt.

Das Material der Substratfolie 1 ist Polyethylenterephthalat, Polyamid oder Polyethersulfon. Für die Substratfolie wird beispielsweise eine Folie aus Polyethylenterephthalat (Hostaphan® 4400 der HOECHST AG) mit einer Dicke von 36 μm verwendet, die in einer Kathodenzerstäubungsanlage mit einem lichtdurchlässigen, wärmereflektierenden Film 2 beschichtet wird. Der lichtdurchlässige und wärmereflektierende Film 2 besteht beispielsweise aus zwei Metallschichten und zwei dielektrischen Schichten und besitzt folgenden Aufbau:

dielektrische Schicht/Silber/metallisches Indium-Zinnoxid/dielektrische Schicht

Als dielektrische Schicht können Zinnoxid oder Zinnoxynitrid der Form $SnO_2$ bzw. $SnO_xN_y$ mit $1 < x < 2$ und $0 < y < 1$ Verwendung finden.

Eine Folie aus Hostaphan[R] 4400 wird bei Temperaturen oberhalb der Glastemperatur biaxial verstreckt und thermofixiert.

Die zusätzliche Verstreckung der Folie aus thermoplastischem Kunststoff, bei Temperaturen unterhalb der Glastemperatur, kann in einem kontinuierlichen Verfahren erfolgen. Auch die Verstreckung einzelner Folienstücke ist möglich. Die Verstreckung kann monoaxial vorgenommen werden, jedoch wird die biaxiale Verstreckung unterhalb der Glastemperatur bevorzugt. Dabei erfolgt die biaxiale Verstreckung in Längs- und Querrichtung simultan, jedoch ist auch eine Verstreckung in aufeinanderfolgenden Schritten möglich.

Der Schnitt in Figur 2 zeigt ein Verbundsicherheitsglas, das aus einem Glas/Polyvinylbutyralfolie/Kunststoffolie mit Funktionsschicht/Polyvinylbutyralfolie/Glas-Laminat besteht. Die beschichtete Kunststoffolie 3 aus der Substratfolie 1 und einer oder mehreren Funktionsschichten 2 schließt mit dem Rand der übrigen Schichten des Laminats 8 ab. Bei diesen Schichten handelt es sich um die an beiden Seiten der Kunststoffolie 3 anliegenden Polyvinylbutyralfolien 4, 5 sowie die daran anschließenden Glasscheiben 6 und 7. Der Laminierprozeß der Kunststoffolie 3 mit den anliegenden Polyvinylbutyralfolien 4 und 5 sowie den daran anschließenden Glasscheiben 6 und 7 ist von der Herstellung von konventionellem Verbundsicherheitsglas bekannt und wird daher nicht weiter erläutert.

Das thermische Verhalten von herkömmlichen Folien und von Folien nach der Erfindung bei einem Temperaturverlauf, wie er bei der Herstellung des Laminats 8 vorliegt, wird anhand eines Vergleichsbeispiels und von zwei Ausführungsbeispielen im folgenden näher erläutert.

Vergleichsbeispiel

Hostaphan[R] 4400 ist eine Folie aus Polyethylenterephthalat, die während ihrer Herstellung bei etwa 90 °C in Maschinenrichtung und bei etwa 110 °C in Querrichtung verstreckt wird. Das Streckverhältnis beträgt jeweils 3 in beiden Richtungen. Die Folie wird anschließend bei etwa 230 °C thermofixiert.

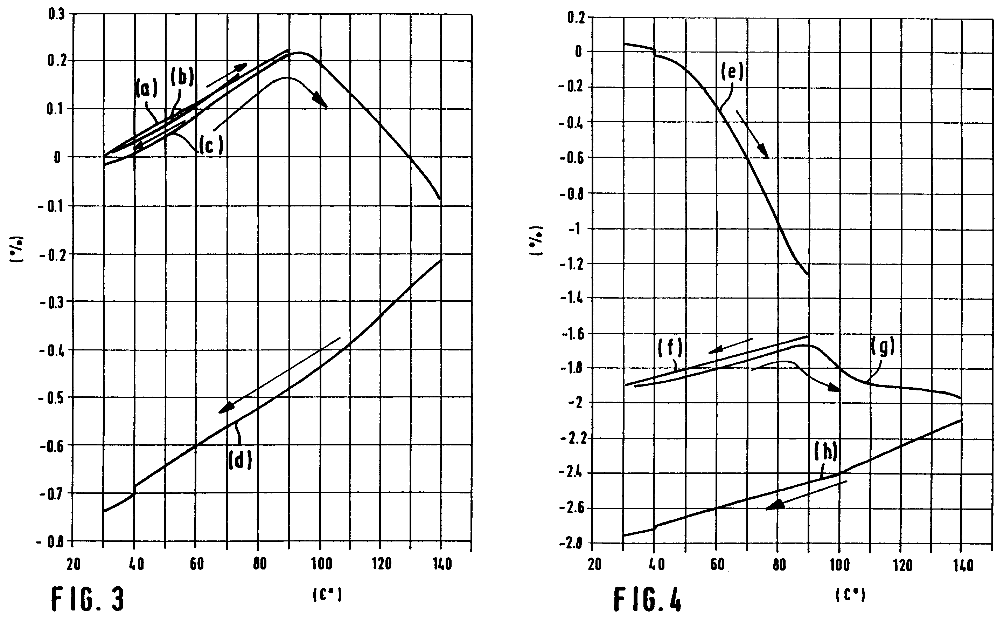

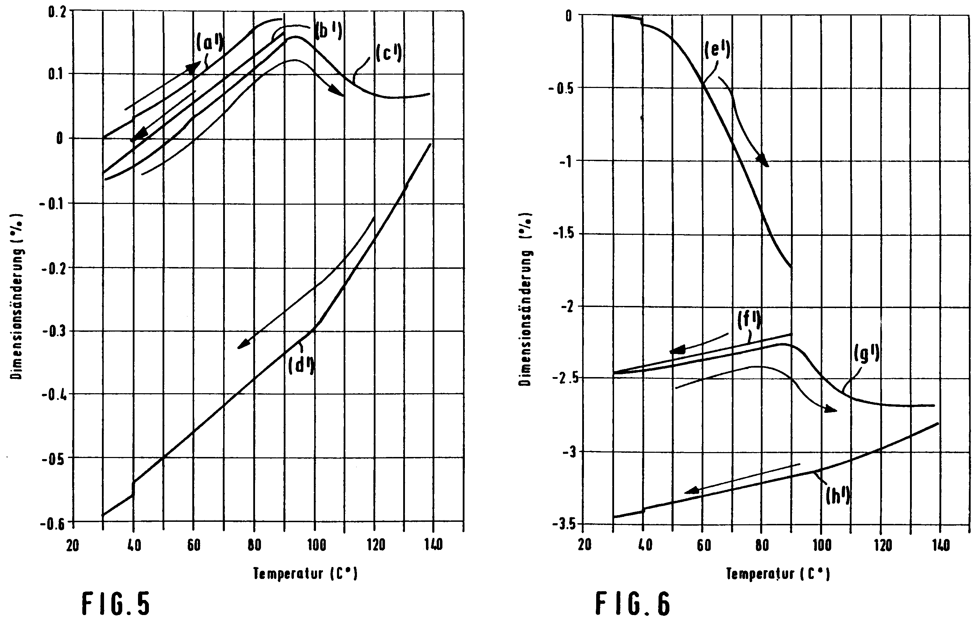

Die Figuren 3 und 5 zeigen die Dimensionsänderungen in Prozenten einer solchen Hostaphan[R] 4400 - Folie in bzw. quer zur Maschinenlaufrichtung in Abhängigkeit von der Temperatur. Dabei zeigen negative Dimensionsänderungen ein Schrumpfen an. Die Folie durchläuft ein Temperaturprogramm, das dem Programm bei der Herstellung von Verbundsicherheitsglas entspricht.

Die Kurven a, a' in den Figuren 3 und 5 zeigen die Dimensionsänderungen beim Aufheizen der Folie. Dieses Aufheizen entspricht dem Laminiervorgang zur Herstellung des Glasvorverbundes in einer Walzenanlage. In der Walzanlage wird das Laminat unter Ausübung von Preßdruck auf etwa 90 °C aufgeheizt. Beim Aufheizen dehnt sich die Kunststoffolie aus, und es kommt dabei zu einer Wellenbildung. Nach dem Durchlaufen der Walzanlage kühlt sich die Folie ab. Die Dimensionsänderungen der freien Folie laufen beim Abkühlen gemäß den Kurven b, b' ab. Die Kurven b, b' führen bei 30 °C etwa zu den Ausgangspunkten der Kurven a, a' zurück. Bei den in das Laminat eingebetteten Folien ist dies nicht der Fall. Wegen des Kontakts zu den PVB-Folien kann sich die thermische Ausdehnung beim Abkühlen nicht zurückbilden. Als nächstes wird der Glasvorverbund in einen Autoklaven gebracht, wo unter Druck bei einem Aufheizen bis zu 140 °C das endgültige Laminat bzw. die Verbundsicherheitsglasscheibe hergestellt wird. Wie die Kurven c, c' erkennen lassen, gibt es während des Aufheizens bei etwa 93 °C ein Maximum der Ausdehnung, und bei weiterem Aufheizen bis 140 °C schrumpft dann die Folie. Die Dimensionsänderung in Prozenten der Folie beim weiteren Abkühlen des Laminats auf eine Ausgangstemperatur von 30 °C zeigen die Kurven d bzw. d'.

Beispiel 1

Anstelle der im Vergleichsbeispiel angeführten herkömmlichen Hostaphan[R] 4400 - Folie wurde eine Hostaphan® 4400 - Folie mit einer Dicke von 36 μm nach der Erfindung in dem Laminat 8 integriert. Die erfindungsgemäße Folie wurde bei 60 °C nochmals biaxial verstreckt, um etwa 5 % in beiden Richtungen. Die Folie wurde anschließend in das Laminat 8 zur Herstellung eines Verbundsicherheitsglases mit dem Aufbau Glas/Polyvinylbutyral/Hostaphan® 4400 - Folie/Polyvinylbutyral/Glas integriert. Diese Folie zeigt im Verbund eine sehr gute Planlage und bildet keine oder geringfügige, vernachlässigbare Wellen aus.

Die Ursache für das unterschiedliche Aussehen der Verbundsicherheitsglasscheiben ist das unterschiedliche thermomechanische Verhalten der beiden Folien.

Figuren 4 und 6 zeigen die Dimensionsänderungen in Prozenten einer Hostaphan® 4400 - Folie nach der Erfindung in und quer zur Maschinenlaufrichtung in Abhängigkeit von der Temperatur. Negative Dimensionsänderungen zeigen einen Schrumpf der Folie an. Das Temperaturprogramm entspricht dem Programm des Vergleichsbeispiels. Wie aus den Kurven e, e' zu erkennen ist, setzt bei der zusätzlich verstreckten Hostaphan® 4400 - Folie ein thermischer Schrumpf bereits bei niedrigen Temperaturen von 30 bis 40 °C ein, der größer ist als die thermische Ausdehnung durch das Aufheizen. Die thermische Ausdehnung wird somit durch den thermischen Schrumpf kompensiert. Die Folie hat in einem Temperaturbereich von 30 °C bis 90 °C einen thermischen Schrumpf, wobei die Dimensionsänderung durch das thermische Schrumpfen in Längsrichtung 0 bis -1,3 % beträgt. Die Dimensionsänderung in Längsrichtung der Folie, nach erfolgter Erwärmung und Abkühlung der Folie im Temperaturbereich von 30 bis 90 °C, durch thermische Ausdehnung beträgt 0 bis +0,2 %. Diese Zahlen zeigen auf, daß der thermische Schrumpf erheblich größer als die thermische Ausdehnung im Temperaturbereich von 30 bis 90 °C ist. Erst dadurch ist sichergestellt, daß es zu keiner Wellenbildung der Folie beim Erwärmen kommt. Die Kurven f und f' zeigen die Abkühlung von 90 °C auf 30 °C, bevor das Laminat 8 im Autoklaven weiterbehandelt wird. Im Autoklaven erfolgt wieder eine Erwärmung des Laminats 8 und somit der Folie 1 gemäß der Kurve g bzw. g'. Wie der Verlauf dieser Kurven zeigt, tritt bei etwa 90 °C ein Maximum der thermischen Ausdehnung auf, das etwa 0,2 % Dimensionsänderung bewirkt. Beim weiteren Erwärmen von 90 °C auf 140 °C schrumpft die Folie 1 im Laminat 8 auf einen Wert, der nur geringfügig geringer als der Ausgangsdimensionswert bei 30 °C ist. Die weitere Abkühlung von 140 °C bis auf 30 °C des Laminats 8 erfolgt entsprechend den Kurven h bzw. h'.

Wie ein Vergleich der Figuren 3 und 5 bzw. 4 und 6 erkennen läßt, sind die grundsätzlichen Temperaturverläufe in und quer zur Maschinenlaufrichtung der Folie sehr ähnlich.

Beispiel 2

Eine Hostaphan$^R$ 4400 - Folie nach der Erfindung mit einer Dicke von 36 µm wurde bei 30 °C nochmals biaxial in beiden Richtungen um jeweils 9 % verstreckt. Diese Folie wurde in einem Laminat 8 zur Herstellung einer Verbundsicherheitsglasscheibe integriert, wobei das Laminat den gleichen Aufbau hatte wie bei Beispiel 1. Die Dimensionsänderungen der Kunststofffolie 1 in Abhängigkeit von der Temperatur zeigten weitgehend einen Verlauf, wie er in den Figuren 4 und 6 dargestellt ist, so daß eine nochmalige Beschreibung und Darstellung dieser Kurven nicht erforderlich ist. Im Laminat 8 zeigt diese Kunststoffolie 1 keinerlei Wellenbildung.

Die Kunststoffolie 1 der Beispiele 1 und 2 wurde mit einer Funktionsschicht 2, wie sie voranstehend beschrieben ist, versehen und in einen Glasverbund integriert. Auch derartig beschichtete Kunststoffolien zeigten weder eine Wellenbildung noch ein Aufreißen der Funktionsschicht 2 als Folge des thermischen Schrumpfens im Temperaturbereich von 30 °C bis 90 °C bzw. von 30 bis 140 °C.

**Patentansprüche**

1. Verfahren zur Herstellung einer Folie aus thermoplastischem Kunststoff, die bei Temperaturen oberhalb der Glastempertur biaxial verstreckt und thermofixiert ist, dadurch gekennzeichnet, daß nach der Thermofixierung eine weitere Verstreckung der Folie bei Temperaturen unterhalb der Glastemperatur vorgenommen wird.

2. Verfahren nach Anspruch 1, dadurch gekennzeichnet, daß die weitere Verstreckung bei Temperaturen im Bereich von 30 °C bis 60 °C erfolgt.

3. Verfahren nach Anspruch 1, dadurch gekennzeichnet, daß die Folie mono- oder biaxial weiterverstreckt wird.

4. Verfahren nach Anspruch 1, dadurch gekennzeichnet, daß die Folie bei Temperaturen unterhalb der Glastemperatur in Längs- und Querrichtung jeweils zwischen 0,5 und 10 % weiterverstreckt wird.

5. Folie aus thermoplastischem Kunststoff, die bei Temperaturen oberhalb der Glastemperatur biaxial verstreckt und thermofixiert ist, hergestellt nach dem Verfahren gemäß der Ansprüche 1 bis 4, dadurch gekennzeichnet, daß der Kunststoff der Folie Polyethylenterephthalat, Polyamid oder Polyethersulfon ist, das bei Temperaturen unterhalb der Glastemperatur im Bereich von 30 °C bis 60 °C zusätzlich biaxial verstreckt ist und daß die Folie bei einer Temperatur im Bereich von 30 °C bis 90 °C einen thermischen Schrumpf aufweist.

6. Folie nach Anspruch 5, dadurch gekennzeichnet, daß der thermische Schrumpf im Temperaturbereich von 30 °C bis 90 °C größer als die thermische Ausdehnung der Folie ist.

7. Folie nach Anspruch 6, dadurch gekennzeichnet, daß die Dimensionsänderung durch thermisches Schrumpfen der Folie in Längsrichtung 0 bis 1,2 % im Temperaturbereich von 30 °C bis 90 °C beträgt.

8. Folie nach Anspruch 6, dadurch gekennzeichnet, daß die Dimensionsänderung in Längsrichtung der Folie, nach erfolgter Erwärmung und Abkühlung der Folie im Temperaturbereich von 30 °C bis 90 °C, durch thermische Ausdehnung 0 bis +0,2 % im Temperaturbereich von 30 °C bis 90 °C beträgt.

9. Folie nach Anspruch 5, dadurch gekennzeichnet, daß die weitere biaxiale Verstreckung in jede der beiden Richtungen 5 bis 9 %, in einem Temperaturbereich von 60 °C bis 30 °C, beträgt.

10. Folie nach Anspruch 9, dadurch gekennzeichnet, daß eine Funktionsschicht ein lichtdurchlässiger, wärmereflektierender Film aus einer Silberschicht, einer metallischen Indium-Zinnoxidschicht und dielektrischen Schichten aus Zinnoxynitrid ist.

11. Verbundsicherheitsglas aus einem Glas (7)/Polyvinylbutyralfolie (5)/Kunststofffolie (1) mit zumindest einer Funktionsschicht (2)/Polyvinylbutyralfolie (4)/Glas (6) - Laminat (8), hergestellt unter Verwendung einer Kunststoffolie nach den Ansprüchen 5 bis 10.

## Claims

1. Process for producing a sheet of a thermoplastic which is biaxially stretched at temperatures above the glass transition temperature and heat-set, wherein heat setting is followed by further stretching the sheet at temperatures below the glass transition temperature.

2. The process as claimed in claim 1, wherein further stretching is carried out at temperatures in the range from 30 °C to 60 °C.

3. The process as claimed in claim 1, wherein the sheet is further stretched monoaxially or biaxially.

4. The process as claimed in claim 1, wherein the sheet is further stretched at temperatures below the glass transition temperature in the longitudinal and transverse directions, in each case between 0.5 and 10 %.

5. Sheet of a thermoplastic which is biaxially stretched at temperatures above the glass transition temperature and heat-set, the sheet being produced according to the process as claimed in claims 1 to 4, wherein the plastic used in the sheet comprises polyethylene terephthalate, polyamide or polyether sulfone which is additionally biaxially stretched at temperatures below the glass transition temperature in the range from 30 °C to 60 °C and wherein the sheet exhibits thermal shrinkage at a temperature in the range from 30 °C to 90 °C.

6. The sheet as claimed in claim 5, wherein thermal shrinkage in the temperature range from 30 °C to 90 °C is greater than thermal expansion of the sheet.

7. The sheet as claimed in claim 6, wherein the dimensional change resulting from thermal shrinkage of the sheet in the longitudinal direction is 0 to 1.2 % in the temperature range from 30 °C to 90 °C.

8. The sheet as claimed in claim 6, wherein the dimensional change resulting from thermal expansion of the sheet in the longitudinal direction, after heating and cooling the sheet in the temperature range from 30 °C to 90 °C, is 0 to +0.2 % in the temperature range from 30 °C to 90 °C.

9. The sheet as claimed in claim 5, wherein further biaxial stretching in each of the two directions is 5 to 9 % in the temperature range from 30 °C to 60 °C.

10. The sheet as claimed in claim 9, wherein a function layer is a light-transparent, heat-reflecting film comprising a silver layer, a metallic indium-tin oxide layer and dielectric layers of tin oxynitride.

11. Laminated safety glass comprising a laminate (8) of glass (7)/polyvinylbutyral sheet (5)/plastic sheet (1) carrying at least one function layer (2)/polyvinylbutyral sheet (4)/glass (6), produced using a plastic sheet as claimed in claims 5 to 10.

## Revendications

1. Procédé pour la fabrication d'une pellicule en matière synthétique thermoplastique, qui est étirée biaxialement à des températures supérieures à la température de transition vitreuse et thermofixée, caractérisée en ce que, après le thermofixage, on effectue un nouvel étirage de la pellicule à des températures inférieures à la température de transition vitreuse.

2. Procédé selon la revendication 1, caractérisé en ce que le nouvel étirage est effectué à des températures dans la plage de 30 à 60°C.

3. Procédé selon la revendication 1, caractérisé en ce que le nouvel étirage de la pellicule est monoaxial ou biaxial.

4. Procédé selon la revendication 1, caractérisé en ce que le nouvel étirage de la pellicule est effectué à des températures inférieures à la température de transition vitreuse, dans le sens longitudinal et dans le sens transversal, dans chaque cas à un degré d'étirage compris entre 0,5 et 10 %.

5. Pellicule en matière synthétique thermoplastique, qui est étirée biaxialement à des températures supérieures à la température de transition vitreuse et thermofixée, fabriquée conformément au procédé selon les revendications 1 à 4, caractérisée en ce que la matière synthétique de la pellicule est un poly(téréphtalate d'éthylène), un polyamide ou une polyéthersulfone, qui est soumis à un étirage biaxial supplémentaire à des températures inférieures à la température de transition vitreuse, dans la plage de 30 à 60°C, et en ce que la pellicule présente un retrait thermique à une température dans la plage de 30 à 90°C.

6. Pellicule selon la revendication 5, caractérisée en ce que le retrait thermique, dans la plage de températures de 30 à 90°C, est supérieur à l'extension thermique de la pellicule.

7. Pellicule selon la revendication 6, caractérisée en ce que la variation dimensionnelle due au retrait thermique de la pellicule va, dans le sens longitudinal, de 0 à 1,2 % dans la plage de températures de 30 à 90°C.

8. Pellicule selon la revendication 6, caractérisée en ce que la variation dimensionnelle dans le sens longitudinal de la pellicule, par extension thermique, une fois effectués le chauffage et le refroidissement de la pellicule dans la plage de températures de 30 à 90°C, va de 0 à +0,2 % dans la plage de températures de 30 à 90°C.

9. Pellicule selon la revendication 5, caractérisée en ce que le nouvel étirage biaxial, dans chacune des deux directions, va de 5 à 9 %, dans une plage de températures de 60 à 30°C.

10. Pellicule selon la revendication 9, caractérisée en ce qu'une couche fonctionnelle est un film transparent, renvoyant la chaleur, constitué d'une couche d'argent, d'une couche d'oxyde d'étain-indium métallique et de couches diélectriques d'oxynitrure d'étain.

11. Verre feuilleté de sécurité constitué d'un stratifié (8) verre (7)/pellicule de polyvinylbutyral (5)/pellicule de matière plastique (1) comportant au moins une couche fonctionnelle (2)/pellicule de polyvinylbutyral (4)/verre (6), fabriqué au moyen d'une pellicule de matière plastique selon les revendications 5 à 10.

FIG.1

FIG.2

FIG. 3

FIG. 4

EP 0 457 209 B1

FIG.6

FIG.5